# FASCICULE DE BREVET EUROPEEN

(11) **EP 2 359 057 B1**
(45) Date de publication et mention de la délivrance du brevet: **04.07.2018**
(21) Numéro de dépôt: 09760942.4
(22) Date de dépôt: 17.11.2009
(51) Int. Cl.: F21V 33/00, F21V 8/00, E04B 2/74

(54) **CLOISON LUMINEUSE**
LEUCHTTRENNWAND
LUMINOUS PARTITION

(30) Priorité: 18.11.2008 FR 0806453
(43) Date de publication de la demande: 24.08.2011
(73) Titulaire: BPB Limited, Binley Business Park Coventry CV3 2TT (GB)
(72) Inventeur: PEREZ, Sylvie, F-92600 Asnieres (FR); BENKEMOUN, Yves, F-92500 Rueil-Malmaison (FR); TRUQUIN, Patrick, F-60810 Barbery (FR); RIVAUD, André, F-77360 Vaires-sur-Marne (FR)
(74) Mandataire: Santarelli
(86) Numéro de dépôt international: PCT/FR2009/001314
(87) Numéro de publication internationale: WO 2010/058096

(56) Documents cités:
- US-A- 3 638 387
- US-A- 4 234 907
- US-A- 4 391 073
- US-A- 4 852 317
- US-A- 5 038 534
- US-A1- 2004 047 142

## Description

La présente invention concerne une cloison lumineuse. Elle concerne particulièrement les moyens mis en oeuvre pour le montage et la réalisation d'une telle cloison.

Il est connu d'utiliser un tissu, dit tissu lumineux, pour réaliser une source lumineuse étendue et répartie sur toute une surface, contrairement aux sources lumineuses habituelles qui sont soit ponctuelles (lampe à incandescence, lampe halogène, LED, ...) ou linéaires (tube néon, lampe halogène, ...). Un tissu lumineux et son procédé de tissage sont par exemple révélés dans le document FR-2 859 737. Le document FR-2 907 194 prévoit quant à lui le collage d'un tissu lumineux sur un support rigide. Le document US 5 038 534 décrit une cloison comportant un parement revêtu d'un tissu. Le problème technique à l'origine de la présente invention est de réaliser une cloison intégrant au moins une plaque lumineuse comprenant un support rigide associé à un tissu lumineux. Il s'agit ici d'intégrer un support rigide recouvert d'un tissu lumineux dans une cloison avec les contraintes existant dans le domaine du bâtiment.

À cet effet, la présente invention propose une cloison, comportant au moins un parement revêtu d'un tissu, ledit parement étant appelé premier parement,
ledit premier parement s'étendant dans un plan sensiblement vertical et comportant une face avant recevant le tissu, une face arrière opposée à la face avant, un bord inférieur et un bord supérieur, caractérisée en ce que le tissu est un tissu lumineux comportant des fibres optiques s'étendant sensiblement verticalement sur la face avant du premier parement et dont des premières extrémités sont repliées autour du bord inférieur du premier parement vers sa face arrière,
en ce qu'un boîtier éventuellement ouvert, dit premier boîtier, d'une part loge des sources lumineuses et d'autre part présente des moyens de connexion pour les extrémités des fibres optiques du tissu lumineux repliées autour du bord inférieur du premier parement,
en ce que le premier boîtier est solidaire du premier parement, et
en ce que le premier boîtier est porté par des pieds s'étendant au-delà du bord inférieur du premier parement.

Les caractéristiques décrites ci-dessus permettent la réalisation d'une cloison en intégrant dans celle-ci au moins un parement lumineux. Il est possible de prévoir sur toute une cloison au choix un, deux ou plusieurs parements recouverts de tissu lumineux. Les parements lumineux peuvent se trouver sur une face de la cloison ou bien sur les deux faces de celle-ci. Les fibres optiques sont raccordées à des sources lumineuses (éventuellement une seule source lumineuse) à l'arrière du parement en étant repliées au niveau du bord inférieur du parement. Ceci permet d'avoir des parements jointifs au niveau des bords verticaux permettant ainsi de réaliser une cloison continue avec plusieurs parements disposés les uns à côté des autres comme pour les cloisons de l'art antérieur. De cette manière, la présente invention permet de s'adapter à des structures de cloisons de l'art antérieur pour la réalisation de cloisons (au moins partiellement) lumineuses. La solution proposée prévoit que des pieds portent le boîtier dans lequel se trouvent les sources lumineuses et auquel sont raccordées les extrémités des fibres optiques du tissu lumineux, ce boîtier portant lui même le parement correspondant. Ainsi ce parement ne vient pas endommager les fibres optiques repliées sous lui en venant les écraser par son propre poids.

Selon une première forme de réalisation, le premier boîtier présente une forme sensiblement parallélépipédique allongée et s'étend parallèlement au bord inférieur du premier parement.

De manière classique, une cloison présente deux parements qui se font face. La présente invention concerne ici également une cloison qui comporte un second parement faisant face au premier parement recevant le tissu lumineux. Dans une telle forme de réalisation, le premier boîtier vient avantageusement en appui sur les deux parements en faisant office d'écarteur entre les deux parements. Toutefois, dans le cas où le second parement reçoit également un tissu lumineux et porte sur sa face arrière également un boîtier contenant au moins une source lumineuse coopérant avec des fibres optiques du tissu lumineux correspondant, alors le boîtier du second parement est de préférence dimensionné et disposé de telle sorte qu'il vienne en appui contre le premier boîtier du premier parement, les deux boîtiers faisant ainsi office d'écarteur entre les deux parements.

Pour s'adapter à chaque configuration, les pieds prévus dans une cloison selon l'invention permettent un réglage en hauteur. Dans ce cas, les moyens de réglage comportent par exemple une tige filetée et un écrou ; le premier boîtier présente avantageusement alors une face inférieure s'étendant perpendiculairement à la face arrière du premier parement duquel il est solidaire, et ladite face inférieure vient en appui sur chaque écrou.

Pour mieux transmettre le poids du premier parement sur les pieds, le premier boîtier est avantageusement solidaire d'une cornière présentant une première aile sur laquelle repose le bord inférieur du premier parement correspondant et une seconde aile s'étendant le long de la face arrière du premier parement correspondant, depuis son bord inférieur jusqu'au premier boîtier.

Pour permettre d'avoir une intensité lumineuse sensiblement uniforme sur toute la hauteur du premier parement recouvert par le tissu lumineux, les secondes extrémités des fibres optiques du tissu lumineux sont avantageusement repliées autour du bord supérieur du premier parement vers sa face arrière, et on prévoit aussi avantageusement un second boîtier éventuellement ouvert qui d'une part loge des sources lumineuses et d'autre part présente des moyens de connexion pour les extrémités des fibres optiques du tissu lumineux repliées autour du bord supérieur du premier parement. Dans une telle forme de réalisation, pour une cloison comportant deux parements se faisant face, le second boîtier vient avantageusement en appui sur les deux parements en faisant office d'écarteur entre les deux parements.

Les parements d'une cloison selon l'invention peuvent être montés, comme pour des cloisons de l'art antérieur, entre une lisse basse et une lisse haute.

Pour que le tissu ne soit pas visible lorsque les sources lumineuses sont éteintes et que la lumière puisse être diffusée lorsque les sources lumineuses sont allumées, on prévoit par exemple que le tissu lumineux est recouvert d'une couche d'un matériau translucide.

Le parement recevant un tissu lumineux peut être par exemple une plaque de plâtre.

Des détails et avantage de la présente invention ressortiront mieux de la description qui suit, faite en référence aux dessins schématiques annexés sur lesquels :
La figure 1 est une vue schématique de côté d'une cloison verticale sur une face de laquelle se trouve un tissu lumineux,
La figure 2 est une vue schématique de la face arrière du support montré sur la figure 1 et portant le tissu lumineux ainsi que des moyens de montage,
La figure 3 montre une variante réalisation dans laquelle les deux faces de la cloison portent un tissu lumineux, et
La figure 4 est une vue correspondant à la figure 1 dans une variante de réalisation.

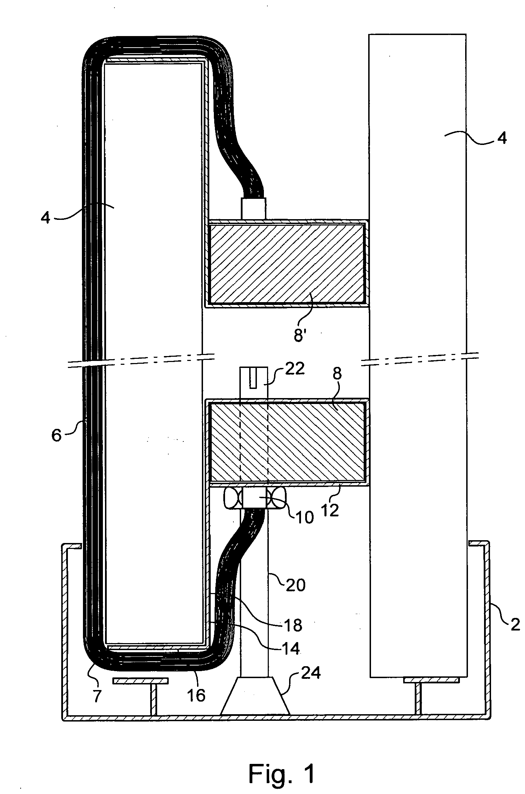

La figure 1 est une vue de côté d'une cloison selon la présente invention. Dans le mode de réalisation représenté, la cloison utilise des profilés tels ceux connus de l'homme du métier pour réaliser des cloisons démontables. De telles cloisons sont par exemple des cloisons appelées cloisons à couvre joint et commercialisées sous la marque Clipper. La description qui suit indique de quelle manière une face d'une telle cloison peut être rendue, au moins partiellement, lumineuse.

De manière classique, une telle cloison comporte une lisse basse 2, une lisse haute non représentée, des montants verticaux non représentés ainsi que des parements 4 qui sont par exemple des plaques de plâtre connues sous l'appellation BA13.

Dans la forme de réalisation représentée sur le dessin, un parement 4 est recouvert sur une face extérieure d'un tissu lumineux 6.

Selon la forme de réalisation, les fils de trame du tissu lumineux 6 sont des fibres optiques 7. Ces dernières dépassent de la surface du tissu lumineux afin de pouvoir être raccordées chacune à une source lumineuse (non représentée). En variante, les fibres optiques pourraient être des fils de chaîne du tissu lumineux.

Dans la forme de réalisation représentée, les fibres optiques 7 sont repliées en bas de la plaque de parement 4 correspondante autour de son bord inférieur et sont connectées aux sources lumineuses qui se trouvent à l'arrière du parement 4 correspondant. Les sources lumineuses sont disposées dans un logement défini à l'intérieur d'un premier boîtier 8. Il s'agit par exemple de diodes électroluminescentes, connues également sous le nom de LED. Les fibres optiques 7 sont reliées par des connecteurs à écrou 10 de type connu de l'homme du métier, sur une plaque inférieure 12 du premier boîtier 8.

Le premier boîtier 8 est fixé par exemple par collage sur la face, appelée face arrière, du parement 4 portant le tissu lumineux 6. On appelle ici face avant du parement 4 la face portant le tissu lumineux 6 et face arrière de ce parement 4 la face opposée à la face avant. Le premier boîtier 8 est par exemple réalisé à l'aide d'un profilé et éventuellement d'un couvercle. Il présente, dans une forme de réalisation préférée représentée sur les dessins, une forme parallélépipédique allongée et s'étend parallèlement au bord inférieur du parement 4 correspondant.

Le premier boîtier 8 est rendu solidaire d'une cornière 14. Cette dernière comporte deux ailes : une première aile 16 sert de support au parement 4 et le bord inférieur de celui-ci vient reposer sur cette première aile 16. La seconde aile 18 relie quant à elle le boîtier 8 à la première aile 16 et s'étend le long de la face arrière du parement 4.

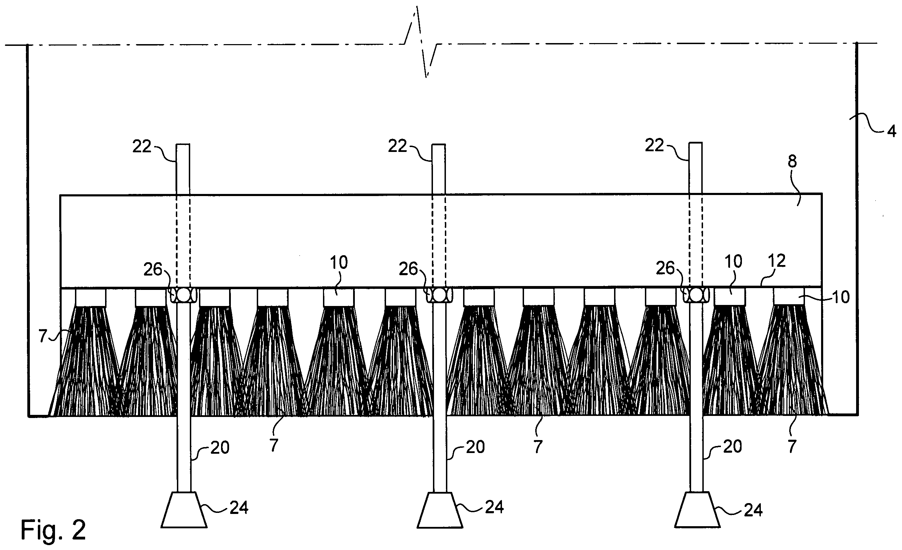

Comme représenté sur les figures, notamment la figure 2, le premier boîtier 8 est porté par des pieds 20. Chaque pied 20 comporte une tige filetée 22 traversant le premier boîtier 8 et une base d'appui 24. Un écrou 26 venant en appui sur la face inférieure 12 du boîtier permet aux pieds 20 de porter le premier boîtier 8. Ce dernier étant solidaire de la cornière 14 dont la première aile 16 porte le parement 4 correspondant, les pieds 20 portent ainsi l'ensemble formé par le parement 4 et le premier boîtier 8 contenant les sources lumineuses. Comme on peut le voir sur les dessins, lorsque les fibres optiques 7 contournent le bord inférieur du parement 4, elles passent à l'extérieur de la cornière 14 (et non pas entre la cornière et le parement). De la sorte, le montage ainsi réalisé permet un montage libre des fibres optiques 7 sans venir les contraindre notamment par le poids du parement 4.

Les pieds 20 viennent reposer par leur base 24 à l'intérieur de la lisse basse 2.

Pour alimenter les sources lumineuses se trouvant dans le premier boîtier 8, un transformateur non représenté est également prévu. Ce transformateur peut être intégré dans le premier boîtier 8 ou être placé entre les deux parements 4 formant la cloison représentée. Ce transformateur doit être alimenté en énergie électrique par un fil circulant dans la lisse basse 2 par exemple.

Dans une forme de réalisation préférée, le premier boîtier 8 est dimensionné de telle sorte qu'il puisse remplir la fonction d'écarteur entre les deux parements 4 de la cloison. Le second parement 4, ne portant pas de tissu lumineux (figure 1), vient alors en appui contre le premier boîtier 8. Ainsi, les deux parements 4 sont maintenus en position d'une part par le premier boîtier 8 et d'autre part par les lisses de la cloison.

En fonction de la hauteur de la cloison, et notamment de la hauteur recouverte par du tissu lumineux 6, il est avantageux d'avoir des sources lumineuses à chacune des extrémités des fibres optiques 7. Dans ce cas, comme représenté sur la figure 1, on prévoit en partie haute du parement 4 de disposer également des sources lumineuses. Ces dernières sont disposées dans un second boîtier 8' similaire au boîtier 8. Il est optionnel en partie haute d'associer ce second boîtier 8' à une cornière telle la cornière 14. L'emploi d'une telle cornière peut toutefois être envisagé en partie haute du parement 4 concerné comme représenté sur la figure 1.

Ainsi, les fibres optiques 7 du tissu lumineux 6 sont alimentées en lumière à la fois par le haut et par le bas. Ceci permet d'avoir une répartition sensiblement uniforme de la lumière sur toute la surface du tissu en supprimant les atténuations qui pourraient apparaître aux extrémités des fibres optiques éloignées des sources lumineuses.

La présence d'un second boîtier 8' en partie haute de la cloison permet de réaliser également un écarteur entre les deux parements 4 dans la partie supérieure de la cloison réalisée.

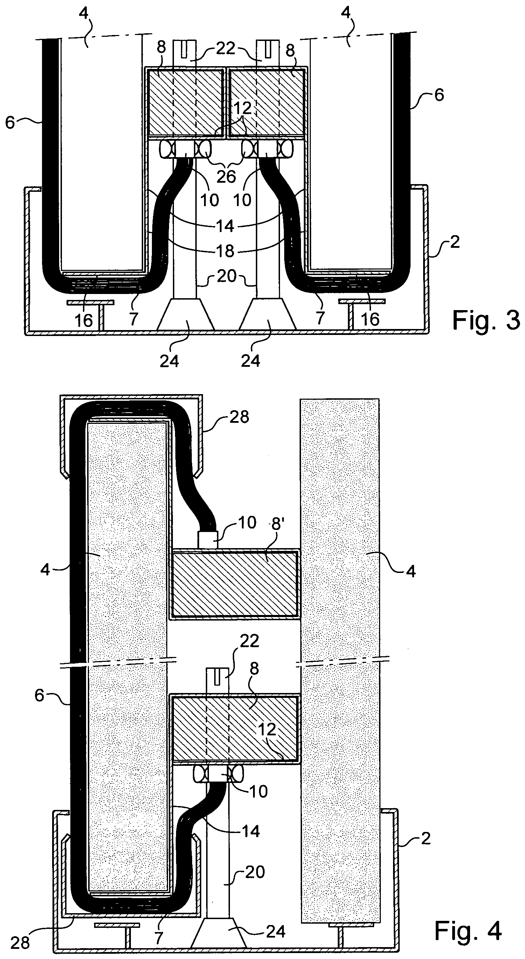

La figure 3 montre à échelle agrandie le bas d'une autre cloison selon l'invention. Par rapport à la cloison des figures 1 et 2, cette cloison comporte deux faces au moins partiellement revêtues de tissu lumineux. On retrouve alors pour réaliser la cloison d'une part une structure comprenant notamment la lisse 2 montrée sur la figure 3 et d'autre part deux ensembles formant chacun un complexe comprenant un parement 4, un tissu lumineux 6 ainsi que les éléments permettant le montage de ce parement 4 recouvert au moins partiellement du tissu lumineux, tels notamment un premier boîtier 8 et des pieds 20.

Chacun des deux ensembles reprend les caractéristiques décrites ci-dessus pour une cloison ne comprenant qu'une face au moins partiellement recouverte d'un tissu lumineux. Comme il ressort de la figure 3, la seule différence qui apparaît concerne le premier boîtier 8. Ce dernier est ici de taille réduite par rapport à la forme de réalisation de la figure 1. Pour que le boîtier 8 conserve sa fonction d'écarteur entre les deux parements 4, son épaisseur est divisée par deux. Deux premiers boîtiers viennent ici côte à côte pour former un écarteur entre les parements 4. Le premier boîtier 8 reprend ainsi ici toutes ses fonctions de la forme de réalisation de la figure 1.

La figure 4 montre une variante de réalisation du montage de la figure 1. Sur cette figure 1, le tissu lumineux 6 est par exemple collé sur la face avant du parement 4 correspondant. Dans la forme de réalisation selon la figure 4, le tissu lumineux 6 est tendu sur cette face avant. Il est maintenu tendu à l'aide de deux pinces 28 qui viennent chacune enserrer soit le bord supérieur, soit le bord inférieur du parement en venant pincer le tissu lumineux 6 sur le parement 4. Chaque pince 28 se présente sous la forme d'une pièce profilée comportant une base et deux bras élastiques. La pince 28 est telle que la distance entre les branches au repos est inférieure à l'épaisseur du parement augmentée de l'épaisseur du tissu lumineux et des fibres optiques repliées. Pour mettre la pince 28 en place, les branches sont écartées, puis la pince est positionnée. Lorsqu'on relâche les branches, la pince 28 vient maintenir le tissu lumineux sur la face avant du parement grâce à l'élasticité des branches.

Dans les diverses formes de réalisation évoquées plus haut, le tissu lumineux 6 peut former une grande surface lumineuse répartie sur toute la face avant 4. Dans certains cas, seule une partie du tissu lumineux sera éclairée lorsque les sources lumineuses sont allumées. En effet, il peut être envisagé de ne faire apparaître de la lumière que sur une partie du tissu lumineux pour représenter un dessin, un logo, une indication, .... Dans ce dernier cas, pour rendre le motif destiné à être éclairé invisible lorsque les sources lumineuses sont éteintes, il est proposé de recouvrir le tissu lumineux 6 d'une couche translucide. Il peut par exemple s'agir d'une couche d'un papier dont la couleur correspond par exemple à la couleur du tissu lumineux. Il peut également s'agir d'une feuille en matière synthétique réalisée dans un matériau diffusant la lumière. D'autres matériaux peuvent être envisagés comme par exemple un tissu fin.

Les différentes formes de réalisation décrites ci-dessus permettent d'adapter à une cloison d'un type connu un textile lumineux. La solution proposée ci-dessus s'intègre en effet dans un système d'ossature "classique" d'une cloison. L'adaptation est donc aisément réalisable et son prix de revient est limité.

L'utilisation d'un tel système permet également d'avoir un ensemble démontable qui permet de réaliser l'entretien des composants se trouvant à l'intérieur de la cloison, entre les parements 4.

Le montage proposé plus haut permet de ne pas dégrader les fibres optiques en évitant de les contraindre mécaniquement, notamment par le poids d'un parement.

Le boîtier utilisé en partie basse pour accueillir les sources lumineuses permet également d'une part de porter le parement correspondant et d'autre part de réaliser l'écartement avec un autre parement formant la cloison. En partie haute, le profilé logeant les sources lumineuses sert également à maintenir l'écartement entre les parements de la cloison.

La présente invention ne se limite pas à la forme de réalisation et à ses variantes décrites ci-dessus à titre d'exemples non limitatifs. Elle concerne également toutes les variantes de réalisation à portée de l'homme du métier dans le cadre des revendications ci-après.

Ainsi, on ne sortirait pas du cadre de l'invention en utilisant un tissu lumineux d'un type différent de celui décrit plus haut. Le support pour ce tissu peut être également différent d'une plaque de plâtre. Tout support rigide apte à être intégré dans la réalisation d'une cloison, et tel par exemple un panneau mélaminé, pourrait également convenir.

La description faite ci-dessus est adaptée plus particulièrement à une ossature de cloison commercialisée sous la marque Clipper. Toutefois, l'invention peut s'appliquer également à d'autres ossatures, et de préférence à des ossatures pour cloisons démontables et/ou amovibles.

## Revendications

1. Cloison, comportant au moins un parement (4) revêtu d'un tissu, ledit parement (4) étant appelé premier parement (4),
ledit premier parement (4) s'étendant dans un plan sensiblement vertical et comportant une face avant recevant le tissu, une face arrière opposée à la face avant, un bord inférieur et un bord supérieur, **caractérisée en ce que** le tissu est un tissu lumineux (6) comportant des fibres optiques (7) s'étendant sensiblement verticalement sur la face avant du premier parement (4) et dont des premières extrémités sont repliées autour du bord inférieur du premier parement (4) vers sa face arrière,
**en ce qu'**un boîtier (8) éventuellement ouvert, dit premier boîtier, d'une part loge des sources lumineuses et d'autre part présente des moyens de connexion (10) pour les extrémités des fibres optiques (8) du tissu lumineux (6) repliées autour du bord inférieur du premier parement (4),
**en ce que** le premier boîtier (8) est solidaire du premier parement (4), et
**en ce que** le premier boîtier (8) est porté par des pieds (20) s'étendant au-delà du bord inférieur du premier parement (4).

2. Cloison selon la revendication 1, **caractérisée en ce que** le premier boîtier (8) présente une forme sensiblement parallélépipédique allongée et s'étend parallèlement au bord inférieur du premier parement (4).

3. Cloison selon l'une des revendications 1 ou 2, **caractérisée en ce qu'**elle comporte un second parement (4) faisant face au premier parement (4) recevant le tissu lumineux (6), et **en ce que** le premier boîtier (8) vient en appui sur les deux parements (4) en faisant office d'écarteur entre les deux parements (4).

4. Cloison selon la revendication 3, **caractérisée en ce que** le second parement reçoit également un tissu lumineux et porte sur sa face arrière également un boîtier contenant au moins une source lumineuse coopérant avec des fibres optiques du tissu lumineux correspondant, et **en ce que** le boîtier du second parement est dimensionné et est disposé de telle sorte qu'il vienne en appui contre le premier boîtier (8) du premier parement, les deux boîtiers faisant ainsi office d'écarteur entre les deux parements (4).

5. Cloison selon l'une des revendications 1 à 4, **caractérisée en ce que** les pieds (20) permettent un réglage en hauteur.

6. Cloison selon la revendication 5, **caractérisée en ce que** chaque pied (20) comporte une tige filetée (22) et un écrou (26), **en ce que** le premier boîtier (8) présente une face inférieure (12) s'étendant perpendiculairement à la face arrière du premier parement (4) duquel il est solidaire, et **en ce que** ladite face inférieure (12) vient en appui sur chaque écrou (26).

7. Cloison selon l'une des revendications 1 à 6, **caractérisée en ce que** le premier boîtier (8) est solidaire d'une cornière (14) présentant une première aile (16) sur laquelle repose le bord inférieur du premier parement (4) correspondant et une seconde aile (18) s'étendant le long de la face arrière du premier parement (4) correspondant, depuis son bord inférieur jusqu'au premier boîtier (8).

8. Cloison selon l'une des revendications 1 à 7, **caractérisée en ce que en ce que** les secondes extrémités des fibres optiques (7) du tissu lumineux sont repliées autour du bord supérieur du premier parement (4) vers sa face arrière, et
**en ce qu'**un boîtier dit boîtier supérieur éventuellement ouvert d'une part loge des sources lumineuses et d'autre part présente des moyens de connexion pour les extrémités des fibres optiques du tissu lumineux repliées autour du bord supérieur du premier parement (4).

9. Cloison selon les revendications 3 et 8, **caractérisée en ce que** le boîtier supérieur vient en appui sur les deux parements (4) en faisant office d'écarteur entre les deux parements (4).

10. Cloison selon l'une des revendications 3, 4 ou 9, **caractérisée en ce que** les parements (4) sont montés entre une lisse basse (2) et une lisse haute.

11. Cloison selon l'une des revendications 1 à 10, **caractérisée en ce que** le tissu lumineux (6) est recouvert d'une couche d'un matériau translucide.

12. Cloison selon l'une des revendications 1 à 11, **caractérisée en ce que** le support rigide associé à un tissu lumineux est une plaque de plâtre.

## Patentansprüche

1. Trennwand, umfassend:
zumindest eine Verkleidung (4), die mit einem Gewebe bedeckt ist,
wobei die Verkleidung (4) erste Verkleidung (4) genannt wird,
wobei die erste Verkleidung (4) sich in einer im Wesentlichen vertikalen Ebene erstreckt und eine das Gewebe aufnehmende Vorderseite, eine der Vorderseite entgegengesetzte Rückseite, eine untere Kante und eine obere Kante aufweist,
**dadurch gekennzeichnet, dass**
das Gewebe ein Leuchtgewebe (6) mit optischen Fasern (7) ist, die sich im Wesentlichen vertikal auf der Vorderseite der ersten Verkleidung (4) erstrecken und deren erste Enden um die untere Kante der ersten Verkleidung (4) zu deren Rückseite hin umgeschlagen sind,
dass ein gegebenenfalls offenes Gehäuse (8), erstes Gehäuse genannt, einerseits Lichtquellen aufnimmt und andererseits Verbindungsmittel (10) für die Enden der optischen Fasern (8) des Leuchtgewebes (6) aufweist, die um die untere Kante der ersten Verkleidung (4) herum umgeschlagen sind, dass das erste Gehäuse (8) fest mit der ersten Verkleidung (4) verbunden ist, und
dass das erste Gehäuse (8) von Füßen (20) getragen ist, die sich über die untere Kante der ersten Verkleidung (4) hinaus erstrecken.

2. Trennwand nach Anspruch 1, **dadurch gekennzeichnet, dass** das erste Gehäuse (8) eine im Wesentlichen quaderförmige, langgestreckte Form hat und sich parallel zur unteren Kante der ersten Verkleidung (4) erstreckt.

3. Trennwand nach einem der Ansprüche 1 oder 2, **dadurch gekennzeichnet, dass** sie eine zweite Verkleidung (4) umfasst, die der ersten Verkleidung (4) gegenüberliegt, welche das Leuchtgewebe (4) aufnimmt, und dass das erste Gehäuse (8) an den beiden Verkleidungen (4) in Anlage gelangt, indem es als Abstandshalter zwischen den beiden Verkleidungen (4) dient.

4. Trennwand nach Anspruch 3, **dadurch gekennzeichnet, dass** die zweite Verkleidung auch ein Leuchtgewebe aufnimmt und an ihrer Rückseite auch ein Gehäuse trägt, das zumindest eine Lichtquelle enthält, die mit den optischen Fasern des entsprechenden Leuchtgewebes zusammenwirkt, und dass das Gehäuse der zweiten Verkleidung so bemessen und angeordnet ist, dass es in Anlage an dem ersten Gehäuse (8) der ersten Verkleidung gelangt, wobei die beiden Gehäuse somit als Abstandshalter zwischen den beiden Verkleidungen (4) dienen.

5. Trennwand nach einem der Ansprüche 1 bis 4, **dadurch gekennzeichnet, dass** die Füße (20) eine Höheneinstellung gestatten.

6. Trennwand nach Anspruch 5, **dadurch gekennzeichnet, dass** jeder Fuß (20) eine Gewindestange (22) und eine Mutter (26) umfasst, dass das erste Gehäuse (8) eine Unterseite (12) aufweist, die sich senkrecht zur Rückseite der ersten Verkleidung (4), mit der sie fest verbunden ist, erstreckt, und dass die Unterseite (12) in Anlage an jede Mutter (26) gelangt.

7. Trennwand nach einem der Ansprüche 1 bis 6, **dadurch gekennzeichnet, dass** das erste Gehäuse (8) fest mit einem Eckprofil (14) verbunden ist, das einen ersten Schenkel (16) aufweist, an dem die untere Kante der entsprechenden ersten Verkleidung (4) aufliegt, sowie einen zweiten Schenkel (18), der sich entlang der Rückseite der entsprechenden ersten Verkleidung (4) von ihrer unteren Kante bis zum ersten Gehäuse (8) erstreckt.

8. Trennwand nach einem der Ansprüche 1 bis 7, **dadurch gekennzeichnet, dass** die zweiten Enden der optischen Fasern (7) des Leuchtgewebes um die obere Kante der ersten Verkleidung (4) zu ihrer Rückseite hin umgeschlagen sind, und dass ein gegebenenfalls offenes Gehäuse, oberes Gehäuse genannt, einerseits Lichtquellen aufnimmt und andererseits Verbindungsmittel für die Enden der optischen Fasern des Leuchtgewebes aufweist, die um die obere Kante der ersten Verkleidung (4) herum umgeschlagen sind.

9. Trennwand nach einem der Ansprüche 3 und 8, **dadurch gekennzeichnet, dass** das obere Gehäuse in Anlage an die beiden Verkleidungen (4) gelangt, indem es als Abstandshalter zwischen den beiden Verkleidungen (4) dient.

10. Trennwand nach einem der Ansprüche 3, 4 oder 9, **dadurch gekennzeichnet, dass** die Verkleidungen (4) zwischen einer unteren Leiste (2) und einer oberen Leiste angebracht sind.

11. Trennwand nach einem der Ansprüche 1 bis 10, **dadurch gekennzeichnet, dass** das Leuchtgewebe (6) mit einer Schicht aus lichtdurchlässigem Material überdeckt ist.

12. Trennwand nach einem der Ansprüche 1 bis 11, **dadurch gekennzeichnet, dass** der einem Leuchtgewebe zugeordnete starre Träger eine Gipsplatte ist.

## Claims

1. Partition comprising at least one cladding panel (4) covered with a fabric, said cladding panel (4) being referred to as the first cladding panel (4), said first cladding panel (4) extending in a substantially vertical plane and having a front face which receives the fabric, a rear face which is opposite the front face, a lower edge and an upper edge, **characterised in that** the fabric is a luminous fabric (6) that comprises optical fibres (7) which extend substantially vertically on the front face of the first cladding panel (4) and of which first ends are bent around the lower edge of the first cladding panel (4) towards the rear face thereof, **in that** an optionally open casing (8), referred to as the first casing, both accommodates light sources and has connection means (10) for the ends of the optical fibres (8) of the luminous fabric (6) that are bent around the lower edge of the first cladding panel (4), **in that** the first casing (8) is interdependent with the first cladding panel (4), and **in that** the first casing (8) is supported by legs (20) which extend beyond the lower edge of the first cladding panel (4).

2. Partition according to claim 1, **characterised in that** the first casing (8) has a substantially elongate parallelepiped shape and extends in parallel with the lower edge of the first cladding panel (4).

3. Partition according to either claim 1 or claim 2, **characterised in that** it comprises a second cladding panel (4) that faces the first cladding panel (4) which receives the luminous fabric (6), and **in that** the first casing (8) abuts the two cladding panels (4) so as to act as a spacer between the two cladding panels (4).

4. Partition according to claim 3, **characterised in that** the second cladding panel also receives a luminous fabric and also has on its rear face a casing containing at least one light source that interacts with optical fibres of the corresponding luminous fabric, and **in that** the casing of the second cladding panel is of such a size that and is arranged such that it abuts the first casing (8) of the first cladding panel, the two casings thus acting as a spacer between the two cladding panels (4).

5. Partition according to any of claims 1 to 4, **characterised in that** the legs (20) allow for a height adjustment to be made.

6. Partition according to claim 5, **characterised in that** each leg (20) comprises a threaded rod (22) and a nut (26), **in that** the first casing (8) has a lower face (12) which extends perpendicularly to the rear face of the first cladding panel (4) with which it is interdependent, and **in that** said lower face (12) abuts each nut (26).

7. Partition according to any of claims 1 to 6, **characterised in that** the first casing (8) is interdependent with a corner piece (14) having a first wing (16) against which the lower edge of the corresponding first cladding panel (4) rests and a second wing (18) which extends along the rear face of the corresponding first cladding panel (4), from the lower edge thereof to the first casing (8).

8. Partition according to any of claims 1 to 7, **characterised in that** the second ends of the optical fibres (7) of the luminous fabric are bent around the upper edge of the first cladding panel (4) towards the rear face thereof, and **in that** an optionally open casing, referred to as the upper casing, both accommodates light sources and has connection means for the ends of the optical fibres of the luminous fabric that are bent around the upper edge of the first cladding panel (4).

9. Partition according to claims 3 and 8, **characterised in that** the upper casing abuts the two cladding panels (4) so as to act as a spacer between the two cladding panels (4).

10. Partition according to any of claims 3, 4 or 9, **characterised in that** the cladding panels (4) are mounted between a bottom rail (2) and a top rail.

11. Partition according to any of claims 1 to 10, **characterised in that** the luminous fabric (6) is covered by a layer of translucent material.

12. Partition according to any of claims 1 to 11, **characterised in that** the rigid support connected to a luminous fabric is a plasterboard.
